(19) Europäisches Patentamt
European Patent Office
Office européen des brevets

(11) Veröffentlichungsnummer: **0 111 454**
**B1**

(12) # EUROPÄISCHE PATENTSCHRIFT

(45) Veröffentlichungstag der Patentschrift: **05.03.86**

(51) Int. Cl.⁴: **D 06 P 1/613**, C 08 F283/06

(21) Anmeldenummer: **83810574.0**

(22) Anmeldetag: **08.12.83**

(54) **Verfahren zum Klotzfärben von Cellulose-Textilmaterialien.**

(30) Priorität: **14.12.82 CH 7268/82**
**06.10.83 CH 5431/83**

(43) Veröffentlichungstag der Anmeldung: **20.06.84 Patentblatt 84/25**

(45) Bekanntmachung des Hinweises auf die Patenterteilung: **05.03.86 Patentblatt 86/10**

(84) Benannte Vertragsstaaten: **AT BE CH DE FR GB IT LI NL**

(56) Entgegenhaltungen:
**EP-A- 0 011 833**
**EP-A- 0 019 188**
**DE-B- 1 111 394**
**GB-A- 2 094 330**
**CHEMICAL ABSTRACTS, Band 93, Nr. 18, 3. November 1980, Seite 73, Nr. 169601c, Columbus, Ohio, US**

(73) Patentinhaber: **CIBA-GEIGY AG**
**Klybeckstrasse 141**
**CH-4002 Basel (CH)**

(72) Erfinder: **Schäfer, Paul, Dr.**
**Kornfeldstrasse 11**
**CH-4125 Riehen (CH)**
Erfinder: **Berendt, Hans-Ulrich**
**Langgartenweg 25**
**CH-4123 Allschwil (CH)**

**EP 0 111 454 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zum Klotzfärben von Textilmaterialien, die ganz oder teilweise aus Cellulosefasern bestehen, mit substantiven Farbstoffen oder vorzugsweise mit Reaktivfarbstoffen.

Das Verfahren ist dadurch gekennzeichnet, dass man die Cellulosematerialien mit wässerigen Färbeflotten klotzt, die ausser den Farbstoffen Pfropfpolymerisate, welche aus einem Anlagerungsprodukt von einem Alkylenoid an einen mindestens dreiwertigen aliphatischen Alkohol mit 3 bis 10 Kohlenstoffatomen und Methacrylamid oder Acrylamid erhältlich sind, enthalten, und anschliessend die Fixierung der Farbstoffe durch Hitzeeinwirkung oder nach der Kalt-Verweil-Methode durchführt.

Bevorzugt sind Pfropfpolymerisate, welche durch Pfropfpolymerisation von Methacrylamid oder insbesondere Acrylamid auf ein Anlagerungsprodukt von 4 bis 100 Mol, vorzugsweise 40 bis 80 Mol Propylenoxid an 3 bis 6 Kohlenstoffatome aufweisende drei- bis sechswertige Alkanole erhältlich sind. Diese Alkanole können geradkettig oder verzweigt sein. Als Beispiele seine Glycerin, Trimethylolethan, Trimethylolpropan, Erythrit, Pentaerythrit, Mannit oder Sorbit genannt.

Weitere geeignete Pfropfpolymerisate sind diejenigen, die durch Aufpfropfen von Methacrylamid oder Acrylamid auf Anlagerungsprodukte von Gemischen aus Ethylenoxid und Propylenoxid oder auch von Ethylenoxid allein an die genannten mehrwertigen Alkohole hergestellt werden.

Als besonders geeignet haben sich vor allem Pfropfpolymerisate aus Acrylamid und Anlagerungsprodukte von 40 bis 80 Mol Propylenoxid an 1 Mol Glycerin erwiesen.

Die erfindungsgemäss verwendeten Pfropfpolymerisate enthalten vorteilhafterweise 2,5 bis 50 Gew.% des definierten Anlagerungsproduktes als Stammkette und 50 bis 97,5 Gew.% aufgepfropftes Acrylamid oder Methacrylamid als Seitenketten.

Vorzugsweise weisen die Pfropfpolymerisate 2,5 bis 20 Gew.% des definitionsgemässen Alkylenoxidadduktes und 80 bis 97,5 Gew.% Methacrylamid oder insbesondere Acrylamid auf. Noch bevorzugter beträgt der Amidanteil 90 bis 97,5 Gew.%, bezogen auf das Pfropfpolymerisat.

Unter diesen Produkten werden solche, die als Stammkette 4 bis 10 Gew.% des Anlagerungsproduktes von 40 bis 80 Mol Propylenoxid an 1 Mol Glycerin und 90 bis 96 Gew.% Acrylamid enthalten, besonders bevorzugt.

Die angegebenen Prozentsätze beziehen sich auf das gesamte Pfropfpolymerisat.

Die Herstellung der erfindungsgemäss verwendeten Pfropfpolymerisate erfolgt nach an sich bekannten Methoden, zweckmässig in der Weise, dass man (1) ein Anlagerungsprodukt von einem Alkylenoxid an einen mindestens dreiwertigen aliphatischen Alkohol von 3 bis 10 Kohlenstoffatomen mit (2) Acrylamid oder Methacrylamid und in Gegenwart von Katalysatoren, zweckmässig bei einer Temperatur von 40 bis 100 °C polymerisiert. Man erhält somit vorwiegend Pfropfpolymerisate, in denen das Alkylenoxidaddukt die Stammkette bildet, die an einzelne Kohlenstoffatome das aufgepfropfte Acrylamid oder Methacrylamid in Form von Seitenketten enthält.

Als Katalysatoren werden zweckmässigerweise freie Radikale bildende organische oder vorzugsweise anorganische Initiatoren verwendet. Geeignete organische Initiatoren zur Durchführung der radikalischen Polymerisation sind z. B. symmetrische Peroxidicarbonate, Butylperoctoate, Butylperbenzoate, Peracetate oder Peroxidicarbamate. Geeignete anorganische Initiatoren sind Wasserstoffsuperoxid, Perborate, Persulfate oder Peroxidisulfate.

Bevorzugter Initiator oder Aktivator ist Kaliumperoxidisulfat.

Diese Katalysatoren können in Mengen von 0,05 bis 5 Gewichtsprozent vorteilhafterweise 0,05 bis 2 Gewichtsprozent und vorzugsweise 0,1 bis 1 Gewichtsprozent, bezogen auf die Ausgangsprodukte eingesetzt werden.

Die Pfropfpolymerisation wird vorteilhafterweise in inerter Atmosphäre z. B. in Gegenwart von Stickstoff durchgeführt.

Die Pfropfpolymerisate fallen als sehr viskose Masse an. Durch Lösen und Verdünnen mit Wasser kann man gelartige Produkte mit einem Trockengehalt von z. B. 0,5 bis 20 Gew.%, vorzugsweise 2 bis 20 Gew.% herstellen. Zur Konservierung und/oder Verbesserung der Lagerstabilität der erhaltenen wässerigen Pfropfpolymerisatlösungen können Konservierungsmittel, wie z. B. Chloracetamid, N-Hydroxymethylchloracetamid, Pentachlorphenolate, Alkalimetallnitrite, Triethanolamin oder vorzugsweise Hydrochinonmonomethylether oder auch antibakterielle Mittel, wie z. B. Natriumazid oder oberflächenaktive quaternäre Ammoniumverbindungen, die einen oder zwei Fettalkylreste aufweisen, zugesetzt werden. Vorteilhafterweisekönnen auch Mischungen dieser Konservierungsmittel und keimtötenden Verbindungen eingesetzt werden.

Die besonders bevorzugten 2 oder 3 bis 5 %igen Lösungen der erhaltenen Pfropfpolymerisate besitzen 25 °C eine Viskosität von 3 000 bis 150 000, vorzugsweise 20 000 bis 120 000 und insbesondere 40 000 bis 80 000 mPas (milli Pascal Sekunde). Die zur Herstellung der Pfropfpolymerisate verwendeten Polyalkylenoxidaddukte weisen in der Regel ein Molekulargewicht von 400 bis 6 000, vorzugsweise 3 000 bis 4 500 auf.

Die Menge, in der die Pfropfpolymerisate in den Farbflotten eingesetzt werden, kann in weiten Grenzen schwanken. So haben sich Mengen von 3 bis 40 g, vorzugsweise 5 bis 40 und insbesondere 8 bis 20 g in Form von 3 bis 10 %igen wässerigen Lösungen, je Liter Farbflotte als vorteilhaft erwiesen.

Das erfindungsgemässe Verfahren eignet sich für das Färben von Textilien, die aus Cellulose bestehen oder diese enthalten, wobei die Cellulosematerialien nach der Klotzstufe einem Hitzebehandlungsprozess unterworfen werden, um die applizierten Farbstoffe zu fixieren. Zweckmässigerweise kann die Fixierung der Farbstoffe auch nach der Kalt-Verweil-Methode erfolgen.

Die Thermofixierstufe kann durch ein Dämpfverfahren, ein Warmverweilverfahren, einen Thermosolierprozess oder vorzugsweise durch eine Mikrowellenbehandlung durchgeführt werden.

Beim Dämpfverfahren werden die mit der Färbeflotte geklotzten Textilmaterialien zur Fixierung der Farbstoffe einer Behandlung in einem Dämpfer mit gegebenenfalls überhitzten Dampf, zweckmässigerweise bei einer Temperatur von 98 bis 130 °C, vorzugsweise 102-110 °C unterzogen.

Beim Warmverweilverfahren lässt man die geklotzte Ware im feuchten Zustand z. B. 15 bis 120 Minuten lang, vorteilhafterweise bei Temperaturen von 85 bis 102 °C verweilen. Hierbei kann die geklotzte Ware durch eine Infrarot-Behandlung auf 85 bis 102 °C vorgeheizt werden. Bevorzugt beträgt die Verweiltemperatur 95 bis 100 °C.

Die Fixierung der Farbstoffe durch den sogenannten Thermosolierprozess kann nach einer oder ohne Zwischentrocknung z. B. einer Temperatur von 100 bis 210 °C erfolgen. Vorzugsweise erfolgt die Thermosolierung bei einer Temperatur von 120 bis 210 °C, vorzugsweise 140 bis 180 °C und nach einer Zwischentrocknung bei 80 bis 120 °C der geklotzten Ware. Je nach der Temperatur kann die Thermosolierung 20 Sekunden bis 5 Minuten, vorzugsweise 30 bis 60 Sekunden dauern.

Vorzugsweise erfolgt die Thermofixierung der Farbstoffe mittels Mikrowellen. Hierbei wird die Ware nach Imprägnierung mit der Färbeflotte und Abquetschen des Feuchtigkeitsüberschusses, zweckmässigerweise aufgerollt, und in einer Kammer mittels Mikrowellen behandelt.

Die Mikrowellenbehandlung kann 2 bis 120 Minuten dauern. Vorzugsweise reichen 2 bis 15 Minuten aus. Als Mikrowellen bezeichnet man elektromagnetische Wellen (Radiowellen) im Frequenzbereich von 300 bis 100 000 MHz, vorzugsweise 1 000 bis 30 000 MHz.

Die Fixierung der Farbstoffe kann auch gemäss dem Kalterweilverfahren durch Lagerung der geklotzten und vorzugsweise aufgerollten Ware bei Raumtemperatur (15 bis 30 °C) z. B. während 3 bis 24 Stunden erfolgen, wobei die Kaltverweilzeit bekanntlich Farbstoff abhängig ist. Gegebenenfalls kann auch bei leicht erhöhter Temperatur (30 bis 80 °C) gelagert werden.

Als Cellulosematerial kommt solches aus regenerierter oder insbesondere natürlicher Cellulose in Betracht, wie z. B. Zellwolle, Viskoseseide, Hanf, Leinen, Jute oder vorzugsweise Baumwolle, sowie Fasermischungen z. B. solche aus Polyamid/Baumwolle oder insbesondere aus Polyester/Baumwolle, wobei der Polyesteranteil mit Dispersionsfarbstoffen vor-, gleichzeitig oder nachgefärbt werden kann.

Das Cellulosematerial kann dabei in den verschiedensten Verarbeitungsstadien vorliegen, insbesondere jedoch als Gewebe oder Gewirke, wie z. B. Schlauchgewirke. Es kann sowohl rohe als auch vorbehandelte Ware verwendet werden.

Bei den im erfindungsgemässen Verfahren eingesetzten Farbstoffen handelt es sich um die üblicherweise zum Färben von Cellulose-Textilmaterialien verwendeten substantiven Farbstoffe oder vor allem Reaktivfarbstoffe.

Als Substantivfarbstoffe sind die üblichen Direktfarbstoffe geeignet, beispielsweise die in Colour Index, 3. Auflage (1971) Band 2 auf den Seiten 2005-2478 genannten « Direct Dyes ».

Unter Reaktivfarbstoffen werden die üblichen Farbstoffe verstanden, welche mit der Cellulose eine chemische Bindung eingehen, z. B. die in Colour Index, in Band 3 (3. Auflage, 1971) auf den Seiten 3391-3560 und in Band 6 (revidierte 3. Auflage, 1975) auf den Seiten 6268-6345 aufgeführten « Reactive Dyes ».

Die Menge der Farbstoffe richtet sich in der Regel nach der gewünschten Farbstärke und beträgt zweckmässig 0,1 bis 100 g pro Liter Flotte, vorzugsweise 5 bis 60 g/l Flotte.

Als alkalisch reagierende Verbindungen zur Fixierung der Reaktivfarbstoffe werden beispielsweise Natriumcarbonat, Natriumbicarbonat, Natriumhydroxid, Dinatriumphosphat, Trinatriumphosphat, Borax, wässeriges Ammoniak oder Alkalispender, wie z. B. Natriumtrichloracetat eingesetzt. Als Alkali hat sich insbesondere eine Mischung aus Wasserglas und einer 30 %igen wässerigen Natriumhydroxidlösung sehr gut bewährt. Der pH-Wert der Alkali enthaltenden Färbeflotten beträgt in der Regel 7,5 bis 13,2, vorzugsweise 8,5 bis 11,5.

Die Klotzflotten werden zweckmässigerweise durch Lösen des Farbstoffes und durch Zusatz des Pfropfpolymerisates und von Alkali vorbereitet. Je nach dem verwendeten Farbstoff können die Färbeflotten weitere übliche Zusätze enthalten, z. B. Elektrolyte, wie z. B. Natriumchlorid oder Natriumsulfat sowie auch Harnstoff, Glycerin und/oder Natriumformiat. Gegebenenfalls können auch Verdickungsmittel, wie z. B. Alginate Stärkeether oder Johannisbrotkernmehlether darin enthalten sein.

Es hat sich vielfach als vorteilhaft erwiesen den Klotzflotten zusätzlich zu den Pfropfpolymerisaten noch handelsübliche alkalibeständige Netzmittel, z. B. Sulfonate von Polycarbonsäureestern wie Dihexylsulfosuccinate oder Dioctylsulfosuccinate ; Alkylarylsulfonate mit geradkettiger oder verzweigter Alkylkette mit mindestens 6 Kohlenstoffatomen, wie z. B. Dodecylbenzolsulfonate oder vorzugsweise Alkylsulfonate, deren Alkylkette 8 bis 20 Kohlenstoffatome enthält, wie z. B. Dodecylsulfonate oder Pentadecylsulfonate, zuzusetzen. Die als Netzmittel genannten Sulfonate liegen in der Regel als Alkalimetallsalze, insbesondere jedoch als Natriumsalze oder Ammoniumsalze vor.

Die Einsatzmengen, in denen die Netzmittel der Klotzflotte zugesetzt werden, bewegen sich zweckmässigerweise zwischen 1 bis 10 g, vorzugsweise 1,5 bis 5 g, pro Liter Flotte.

Eine vorteilhafte Ausführungsform der Erfindung besteht darin, dass man das Cellulosematerial mit einer Färbeflotte imprägniert, welche das definitionsgemässe Pfropfpolymerisat in Kombination mit einem Netzmittel enthält, welches aus (A) einem Alkylsulfonat, dessen Alkylrest 8 bis 20 Kohlenstoffatome aufweist, und (B) einem Anlagerungsprodukt von 2 bis 40 Mol Ethylenoxid an 1 Mol Fettalkohol oder Fettsäure mit jeweils 8 bis 22 Kohlenstoffatomen oder an 1 Mol Alkylphenol mit insgesamt 4 bis 12 Kohlenstoffatomen im Alkylteil besteht. Die Komponenten (A) und (B) liegen in der Regel in einem Gewichtsverhältnis von 5 : 1 bis 1 : 1, vorzugsweise 5 : 1 bis 2 : 1 und insbesondere 4 : 1 bis 3 : 1 vor.

Bevorzugte Ethylenoxidaddukte (B) sind diejenigen, die durch Anlagerung von 2 bis 10 Mol Ethylenoxid an 1 Mol Fettalkohol mit 8 bis 12 Kohlenstoffatomen erhalten werden.

Die genannte Kombination kann auch in Form einer wässerigen Zubereitung verwendet werden. Diese Zubereitung kann durch einfaches Verrühren einer wässerigen Lösung des gelartigen Pfropfpolymerisats mit den Komponenten (A) und (B) erhalten werden. Unter Zugabe von Wasser und gegenenenfalls einer Natriumchlorid-Lösung und eines Silikonöls und/oder eines Silikontensides werden sie als homogene Mischungen erhalten.

Diese wässerigen Zubereitungen enthalten mit Vorteil, jeweils bezogen auf die wässerige Zubereitung, mindestens

1 bis 10 Gew.-% des definitionsgemässen Pfropfpolymerisates
8 bis 25 Gew.-% des Alkylsulfonates (A)
3 bis 10 Gew.-% des Ethylenoxidadduktes (B)
65 bis 88 Gew.-% Wasser und
0 bis 3 Gew.-% weitere Hilfsstoffe.

Die Einsatzmengen, in denen diese Hilfsmittelzubereitungen der Klotzflotte zugesetzt werden können, bewegen sich vorteilhafterweise zwischen 10 bis 30 g pro Liter Flotte.

Im Anschluss an den Färbeprozess kann man das gefärbte Cellulosematerial in üblicher Weise auswaschen um nichtfixierten Farbstoff zu entfernen. Man behandelt dazu das Substrat beispielsweise bei 40 °C bis Kochtemperatur in einer Lösung, die Seife oder synthetisches Waschmittel enthält. Anschliessend kann zur Verbesserung der Nassechtheiten eine Behandlung mit einem Fixiermittel erfolgen.

Man erreicht mit dem erfindungsgemässen Verfahren bis zu einer 40 %-igen Steigerung der Farbflottenaufnahme und infolgedessen auch eine Erhöhung der Farbausbeuten. Schon bei Zusatz geringer Mengen der definitionsgemässen Pfropfpolymerisate werden deutlich bessere Farbausbeuten erzielt.

Gegenüber den bisher beschriebenen Acrylamid-Homopolymeren oder Mischpolymeren von Acrylsäureamid mit weiteren ethylenisch ungesättigten polymerisierbaren Monomeren, wie sie beispielsweise in der DE-A-2 918 607 beschrieben sind, werden gemäss dem vorliegenden Verfahren bei niedrigeren Einsatzmengen der Pfropfpolymerisate höhere Farbausbeuten erzielt.

Man erhält zudem egale und farbkräftige Ausfärbungen, die sich durch ein ruhiges Warenbild auszeichnen. Desweiteren werden die Echtheiten der Färbungen, wie z. B. Lichtechtheit, Reibechtheit und Nassechtheiten durch den Einsatz des definierten Pfropfpolymerisates nicht negativ beeinflusst.

In den folgenden Herstellungsvorschriften und Beispielen beziehen sich die Prozentansätze, wenn nichts anderes angegeben ist, auf das Gewicht. Die Mengen beziehen sich bei den Farbstoffen auf handelsübliche, d. h. coupierte Ware und bei den Hilfsmitteln auf Reinsubstanz. Die fünfstelligen Colour-Index Nummern (C.I.) beziehen sich auf die 3. Auflage des Colour-Index.

## Herstellungsvorschriften

Vorschrift 1 : Eine Lösung von 22,5 g Acrylamid, 2,5 g eines Anlagerungsproduktes von 52 Mol Propylenoxid an 1 Mol Glycerin und 0,04 g Kaliumperoxidisulfat in 200 g Wasser wird unter Rühren und Ueberleiten von Stickstoff auf 50 °C erwärmt und 3 Stunden bei dieser Temperatur gehalten. Hierauf lässt man eine Lösung von 0,03 g Kaliumperoxidisulfat in 40 g Wasser während 60 Minuten zutropfen und verdünnt die sehr viskose Lösung unter Zugabe von 300 ml Wasser während 30 Minuten. Alsdann wird die Reaktionsmischung 5 Stunden bei 50 °C gehalten, anschliessend mit 0,6 g Hydrochinon-monomethylether und 0,12 g Natriumazid versetzt und unter Rühren auf Raumtemperatur abgekühlt. Man erhält 565 g eines Gels mit einem Polymergehalt von 4,4 %. Dieses Gel hat, gemessen bei 25 °C, eine Viskosität von 112 957 mPas.

Vorschrift 2 : Eine Lösung von 71,25 g Acrylamid, 3,75 g eines Adduktes aus Propylenoxid und Glycerin mit einem durchschnittlichen Molekulargewicht von 4 200 und 0,09 g Kaliumperoxidisulfat in 600 g Wasser wird vorgelegt und unter Rühren und Ueberleiten von Stickstoff auf 50 °C erwärmt und 3 Stunden auf 50 °C gehalten. Die Viskosität der Lösung nimmt allmählich zu. Man lässt eine Lösung von 0,06 g Kaliumperoxidisulfat in 120 g Wasser während 60 Minuten zutropfen. Etwa 10 Minuten nach Beginn des Zutropfens wird die Viskosität der Lösung so gross, dass man während der folgenden 20 Minuten 600 g Wasser zufliessen lassen muss. Nach beendetem Zutropfen der Kaliumperoxidisulfatlösung hält man die zunehmend viskose Lösung weitere 5 Stunden auf 50 °C, wobei mit zusätzlichen 400 g Wasser in Portionen verdünnt wird. Man fügt 1,7 g Hydrochinon-monomethylether zu, kühlt unter Rühren auf Raumtemperatur ab und erhält 1 794 g eines frei fliessenden Gels mit einem Polymergehalt von 4,3 %. Dieses Gel hat, gemessen bei 25 °C, eine Viskosität von 64 202 mPas.

Vorschrift 3 : Eine Lösung von 71,25 g Acrylamid, 3,75 g eines Adduktes aus Propylenoxid und Pentaerythrit mit einem durchschnittlichen Molekulargewicht von 3 550 und 0,09 g Kaliumperoxidisulfat in 600 g Wasser wird unter Rühren und Ueberleiten von Stickstoff auf 50 °C erwärmt und 3 Stunden auf 50 °C gehalten. Die Viskosität der Lösung nimmt allmählich zu. Man lässt nun eine Lösung von 0,06 g Kaliumperoxidisulfat in 120 g Wasser während 60 Minuten zutropfen. Etwa 30 Minuten nach beendetem Zutropfen nimmt die Viskosität der Lösung zu. Man lässt deshalb während der folgenden 20 Minuten 600 g Wasser zufliessen. Man hält dann die stets viskösere Lösung weitere 4 Stunden auf 50 °C, verdünnt danach mit zusätzlichen 400 g Wasser, fügt 3,4 g Triethanolamin zu, kühlt unter Rühren auf Raumtemperatur ab und erhält 1 793 g eines noch fliessenden Gels mit einem Feststoffgehalt von 4,0 %. Dieses Gel hat, gemessen bei 25 °C, eine Viskosität von 75 300 mPas.

Vorschrift 4 : Eine Lösung von 17,8 g Acrylamid, 0,94 g eines Anlagerungsproduktes von 70 Mol Propylenoxid und 6 Mol Ethylenoxid an 1 Mol Glycerin und 0,025 g Kaliumperoxidisulfat in 250 g Wasser wird unter Rühren und Ueberleiten von Stickstoff auf 50 °C erwärmt und 3 Stunden bei dieser Temperatur gehalten. Man erhöht die Temperatur der Lösung im Verlaufe von 20 Minuten auf 60-63 °C bis die Viskosität deutlich zunimmt und kühlt danach auf 55 °C ab. Man hält die zunehmend viskoser werdende Lösung 5 Stunden auf 55 °C. Alsdann versetzt man die viskose Lösung mit einer Lösung von 0,45 g Chloracetamid und 0,45 g Hydrochinon-monomethylether in 177 g Wasser und erhält 446 g eines Gels mit einem Pfropfpolymerisatgehalt von 4,2 %. Dieses Gel hat, gemessen bei 25 °C, eine Viskosität von 96 750 mPas.

Vorschrift 5 : Ersetzt man in der Vorschrift 4 das angegebene Anlagerungsprodukt durch ein weiteres Anlagerungsprodukt von 53 Mol Propylenoxid an 1 Mol Trimethylolpropan, so erhält man 446 g eines Gels mit einem Pfropfpolymerisatgehalt von 4,2 %. Dieses Gel hat, gemessen bei 25 °C, eine Viskosität von 19 500 mPas.

Vorschrift 6 : Eine Lösung von 17,24 g Acrylamid, 4,31 g eines Anlagerungsproduktes von 70 Mol Propylenoxid an 1 Mol Glycerin und 0,035 g Kaliumperoxidisulfat in 200 g Wasser wird unter Rühren und Ueberleiten von Stickstoff auf 50 °C erwärmt und 4 Stunden bei dieser Temperatur gehalten. Anschliessend wird die zunehmend viskoser werdende Lösung 5 Stunden auf 55 °C erwärmt. Man versetzt das Gel mit einer Lösung von 0,4 g Chloracetamid und 0,4 g Hydrochinonmonomethyläther in 291 g Wasser und erhält 513 g eines Gels mit einem Polymergehalt von 4,2 %. Dieses Gel hat, gemessen bei 25 °C, eine Viskosität von 25 750 mPas.

Vorschrift 7 : Eine Mischung von 15,1 g Acrylamid, 6,5 g eines Anlagerungsproduktes von 70 Mol Propylenoxid an 1 Mol Glycerin und 0,025 g Kaliumperoxidisulfat in 200 g Wasser wird unter Rühren und Ueberleiten von Stickstoff auf 50 °C erwärmt und 3 Stunden bei dieser Temperatur gehalten. Anschliessend wird die zunehmend viskoser werdende Lösung 5 Stunden auf 55 °C erwärmt. Man versetzt das Gel mit einer Lösung von 0,4 g Chloracetamid und 0,4 g Hydrochinonmonomethyläther in 291 g Wasser und erhält 512 g eines Gels mit einem Polymergehalt von 4,2 %. Dieses Gel hat, gemessen bei 25 °C, eine Viskosität von 16 300 mPas.

Vorschrift 8 : Eine Mischung von 13 g Acrylamid, 8,7 g eines Anlagerungsproduktes von 70 Mol Propylenoxid an 1 Mol Glycerin und 0,015 g Kaliumperoxiddisulfat in 150 g Wasser wird unter Rühren und Ueberleiten von Stickstoff auf 50 °C erwärmt und 4 Stunden bei dieser Temperatur gehalten. Anschliessend wird die zunehmend viskoser werdende Lösung 2 Stunden auf 65 °C und weitere 3 Stunden auf 60 °C erwärmt. Man versetzt das Gel mit einer Lösung von 0,4 g Chloracetamid und 0,4 g Hydrochinonmonomethyläther in 347 g Wasser und erhält 519 g eines Gels mit einem Polymergehalt von 4,2 %. Dieses Gel hat, gemessen bei 25 °C, eine Viskosität von 15 582 mPas.

## Anwendungsbeispiele

### Beispiel 1

Ein rohes Baumwollgewirke mit einem Flächengewicht von 165 g/m$^2$ wird auf einem Foulard bei 25 °C mit einer Flotte, die im Liter

50 g des Farbstoffes der Formel

(Siehe Figur Seite 6 f.)

(101) 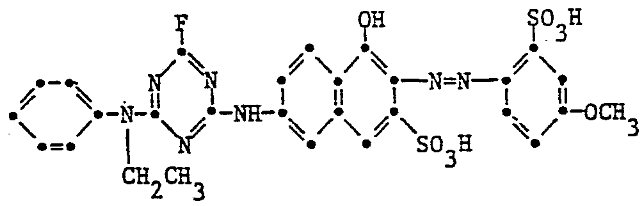

2,5 g eines Netzmittels bestehend aus Pentadekan-1-sulfonsäure-Natriumsalz und dem Anlagerungsprodukt von 4 Mol Ethylenoxid an 1 Mol eines $C_9$-$C_{11}$-primären Alkohols im Gewichtsverhältnis 3 : 1,
10 ml eines gemäss Vorschrift 2 hergestellten Pfropfpolymerisates,
10 ml Natriumhydroxidlösung (30 %) und
75 ml Natronwasserglaslösung mit 26,3-27,7 % Silikatgehalt,

enthält, imprägniert, worauf bei einer Tauchzeit von 0,86 Sekunden und einem Walzendruck von 1,5 bar/cm² eine Flottenaufnahme von 107 % (berechnet auf das Trockengewicht des Substrates) erzielt wird. Hiernach wird das Gewirke aufgerollt und 6 Stunden bei 25 °C gelagert. Alsdann wird das Gewirke gespült und 20 Minuten bei Kochtemperatur mit einem nichtionogenen Waschmittel (0,5 g/l des Additionsproduktes von 9 Mol Ethylenoxid an 1 Mol Nonylphenol) in einem Flottenverhältnis von 1 : 40 nachgewaschen. Anschliessend wird das Substrat nochmals gespült und getrocknet.

Man erhält eine farbstarke und brillante rote Färbung, die sich besonders durch ein ruhiges Warenbild auszeichnet.

## Beispiel 2

Ein rohes Baumwollgewirke (Flächengewicht 165 g/m²) wird auf einem Foulard bei 25 °C mit einer Flotte, die im Liter

50 g des Farbstoffes der Formel

(102) 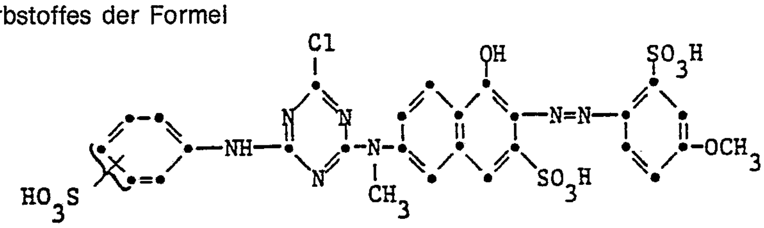

2,5 g des Netzmittels gemäss Beispiel 1,
10 ml des gemäss Vorschrift 2 hergestellten Pfropfpolymerisates,
92 ml Natriumhydroxidlösung (30 %) und
100 ml Natronwasserglaslösung

enthält, imprägniert, worauf man nach dem Klotzen eine Flottenaufnahme von 110 % erhält (berechnet auf das Trockengewicht des Substrates). Das imprägnierte Gewirke wird aufgerollt und 18 Stunden bei 25 °C gelagert. Hiernach erfolgt die Fertigstellung der Färbung wie in Beispiel 1.

Man erhält eine farbstarke und brillante rote Färbung, die sich auch durch ein gutes Durchfärben und ein sehr ruhiges Warenbild auszeichnet.

## Beispiel 3

Ein rohes Baumwollgewirke (Flächengewicht 165 g/m²) wird auf einem Foulard bei 40 °C mit einer Flotte, die im Liter

20 g des Direktfarbstoffes Direct red 80 C.I. Nr. 35780
5 g des Netzmittels gemäss Beispiel 1
20 g des gemäss Vorschrift 2 hergestellten Pfropfpolymerisates und
100 g Harnstoff

enthält, imprägniert, worauf bei einer Tauchzeit von 0,86 Sekunden und einem Walzendruck von 1,5 bar/cm² eine Flottenaufnahme von 109 % (berechnet auf das Trockengewicht des Substrates) erzielt wird. Hiernach wird das Gewirke 16 Stunden bei 25 °C gelagert. Alsdann wird das Gewirke warm (40 °C) und kalt gespült und üblicherweise mit einem kationischen Hilfsmittel zur Verbesserung der Nassechtheiten nachbehandelt, nochmals gespült und getrocknet.

Man erhält eine farbstarke rote Färbung, die sich zudem durch ein ruhiges Warenbild auszeichnet. Gegenüber einer konventionellen Färbeweise zeigt die erhaltene Färbung eine 30 %ige Steigerung der Farbausbeute.

Beispiel 4

Ein gebleichtes Baumwoll-Cordsamt-Gewebe (350 g/m²) wird auf einem Foulard bei 25 °C mit einer Flotte, die im Liter

40 g des Farbstoffes der Formel (101)
1 g eines wässerigen Netzmittels enthaltend 23 Gew.% eines Alkylbenzolsulfonates, wie z. B. Dodecylbenzolsulfonat (Natriumsalz), 8 Gew.% eines Alkylsulfonates Pentadecyl- oder Dodecylsulfonat (Natriumsalz) und 16 Gew.% eines $C_{12}$-$C_{14}$-Fettalkoholpolyglykolether
100 g Harnstoff
20 g des gemäss Vorschrift 2 hergestellten Pfropfpolymerisates
20 g Natriumcarbonat (wasserfrei) und
2 g m-Nitrobenzolsulfonsäure (Natriumsalz)

enthält, imprägniert, worauf bei einer Tauchzeit von 0,86 Sekunden und einem Walzendruck von 2 bar/cm² eine Flottenaufnahme von 95 % (bezogen auf das Trockengewicht des Substrates) erzielt wird. Hiernach wird das Gewebe 3 Minuten bei 102 °C gedämpft. Danach wird das Gewebe gespült und 20 Minuten bei Kochtemperatur mit einem nichtionogenen Waschmittel (0,5 g/l des Additionsproduktes von 9 Mol Ethylenoxid an 1 Mol Nonylphenol) in einem Flottenverhältnis von 1 : 40 nachgewaschen. Anschliessend wird die Ware nochmals gespült und getrocknet.

Man erhält eine farbstarke und brillante rote Färbung, die sich durch ein ruhiges Warenbild auszeichnet.

Beispiel 5

Ein gebleichtes Baumwoll-Cordsamt-Gewebe (350 g/m²) wird auf einem Foulard bei 40 °C mit einer Flotte, die im Liter

20 g des Farbstoffes der Formel

(103)

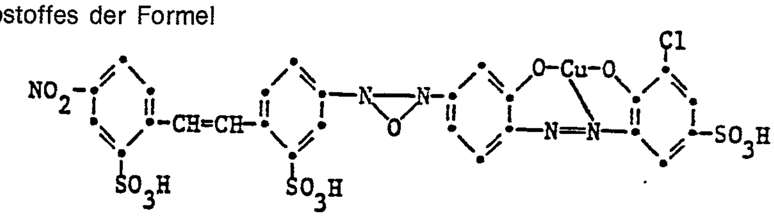

1 g des Netzmittels gemäss Beispiel 4
100 g Harnstoff
20 g des gemäss Vorschrift 2 hergestellten Pfropfpolymerisates

enthält, imprägniert, wobei bei einer Durchlaufgeschwindigkeit von 2 m/min und einem Walzendruck von 2 bar/cm² eine Flottenaufnahme von 90 % (bezogen auf das Trockengewicht des Substrates) erzielt wird. Hiernach wird das Gewebe 3 Minuten bei 102 °C gedämpft. Anschliessend wird das Gewebe warm (40 °C) und kalt gespült und zur Verbesserung der Nassechtheiten mit einem kationischen Fixiermittel nachbehandelt.

Man erhält eine dunkelbraune Färbung mit guten Echtheiten und einem ruhigen Warenbild.

Beispiel 6

Ein rohes Baumwollgewirke (Flächengewicht 165 g/m²) wird auf einem Foulard bei 25 °C mit einer Flotte, die im Liter 20 g des Farbstoffes der Formel

(104)

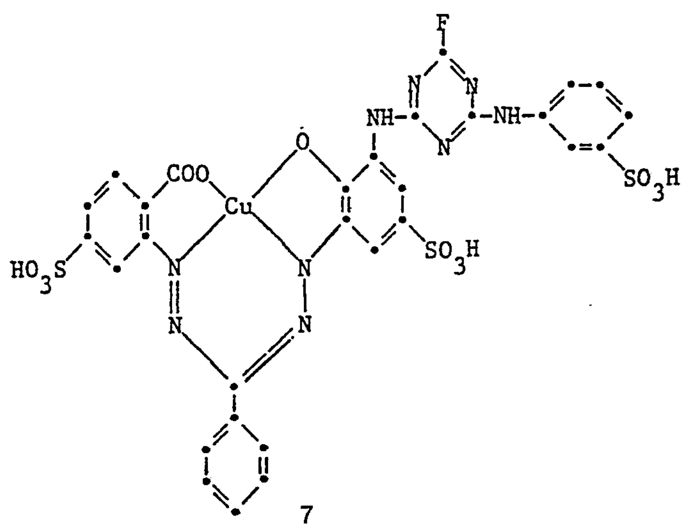

100 g Harnstoff,
50 g Natriumsulfat,
20 g des gemäss Vorschrift 1 hergestellten Pfropfpolymerisates,
5 g m-Nitrobenzolsulfonsäure (Natriumsalz)
2,5 g eines wässerigen Netzmittels enthaltend 43 % Pentadekan-1-sulfonsäure-Natriumsalz, 14 % eines $C_9$-$C_{11}$-Fettalkoholpolyglykolethers und 5 % 2-Ethylhexanol und
20 g Natriumcarbonat

enthält, imprägniert und auf eine Flottenaufnahme von 104 % abgequetscht (bezogen auf das Trockengewicht des Substrates).

Hiernach wird as Gewirke 90 Sekunden bei 102 °C gedämpft. Alsdann wird das Gewirke gespült und wie im Beispiel 1 beschrieben gewaschen, nochmals gespült und dann getrocknet. Man erhält eine farbstarke blaue Färbung, welche sich durch eine gute Durchfärbung und ein ruhiges Warenbild auszeichnet.

Ein ähnlich gute Färbung wird erzielt, wenn anstelle des gemäss Vorschrift 1 hergestellten Pfropfpolymerisates gleiche Mengen des gemäss Vorschrift 3 hergestellten Pfropfpolymerisates eingesetzt werden.

## Beispiel 7

Ein rohes Baumwolltrikotgewirke wird mit einer 30 °C warmen, wässrigen Flotte, die im Liter

50 g des Farbstoffes der Formel (102),
20 g des gemäss Vorschrift 4 hergestellten Pfropfpolymerisates,
5 g des Netzmittels gemäss Beispiel 6,
92 ml Natriumhydroxid-Lösung (30 %) und
100 ml Natronwasserglas-Lösung

enthält, imprägniert, worauf nach dem Klotzen eine Flottenaufnahme von 104 % erhalten wird (berechnet auf das Trockengewicht des Substrates). Hiernach wird das Gewirke in einem Dämpfer 90 Sekunden bei 102 °C gedämpft. Anschliessend wird die gefärbte Ware gespült, heiss gewaschen und nochmals gespült.

Man erhält eine kräftige Rotfärbung mit einem ausserordentlich gleichmässigen Warenbild.

Ähnlich gute Effekte erhält man, wenn man anstelle des gemäss Vorschrift 4 hergestellten Pfropfpolymerisates die gleiche Menge des gemäss Vorschrift 5 hergestellten Pfropfpolymerisates verwendet wird.

## Beispiel 8

Ein rohes Baumwollgewirke mit einem Flächengewicht von

165 g/m² wird auf einem Foulard bei 25 °C mit einer Flotte, die im Liter
50 g des Farbstoffes der Formel (101)
2,5 g eines Netzmittels bestehend aus Pentadekan-1-sulfonsäure-Natriumsalz und dem Anlagerungsprodukt von 4 Mol Ethylenoxid an 1 Mol eines $C_9$-$C_{11}$-primären Alkohols im Gewichtsverhältnis 3 : 1,
10 ml eines gemäss Vorschrift 2 hergestellten Pfropfpolymerisates,
10 ml Natriumhydroxidlösung (30 %) und
75 ml Natronwasserglaslösung mit 26,3-27,7 % Silikatgehalt,

enthält, imprägniert, worauf bei einer Tauchzeit von 0,86 Sekunden und einem Walzendruck von 1,5 bar/cm² eine Flottenaufnahme von 128 % (berechnet auf das Trockengewicht des Substrates) erzielt wird. Hiernach wird das Gewirke aufgerollt, in eine Plastikfolie eingewickelt und 3 Minuten mit Mikrowellen bei einer Frequenz von 2 450 MHz behandelt. Alsdann wird das Gewirke gespült und 20 Minuten bei Kochtemperatur mit einem nichtionogenen Waschmittel (0,5 g/l des Additionsproduktes von 9 Mol Ethylenoxid an 1 Mol Nonylphenol) in einem Flottenverhältnis von 1 : 40 nachgewaschen. Anschliessend wird das Substrat nochmals gespült und getrocknet.

Man erhält eine farbstarke und brillante rote Färbung von guter Egalität.

Aehnlich gute Färbungen werden erzielt, wenn anstelle des gemäss Vorschrift 2 hergestellten Pfropfpolymerisates jeweils gleiche Mengen der gemäss Vorschriften 1 und 3 bis 7 hergestellten Pfropfpolymerisate eingesetzt werden.

## Beispiel 9

Ein rohes, geschlichtetes Baumwollgewebe mit einem Flächengewicht von 208 g/m² wird auf einem Foulard bei 25 °C mit einer Flotte, die im Liter

35 g des Farbstoffes der Formel

(105) 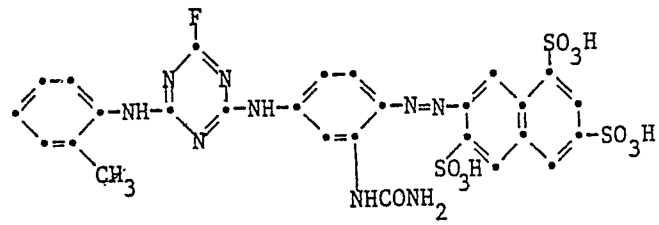

15 g des Farbstoffes der Formel (104),
5 g des Netzmittels gemäss Beispiel 1,
20 g des gemäss Vorschrift 2 hergestellten Pfropfpolymerisates,
200 g Harnstoff,
15 g Natriumbicarbonat und
5 g m-Nitrobenzolsulfonsäure (Natriumsalz)

enthält, imprägniert, wobei nach dem Abquetschen eine Flottenaufnahme von 119 % erzielt wird. Hiernach wird das Gewebe bei 100 °C getrocknet und dann zur Fixierung des Farbstoffes 40 Sekunden bei 180 °C behandelt. Anschliessend erfolgt die Fertigstellung der Färbung wie in Beispiel 1 beschrieben.

Man erhält eine grüne Färbung mit einer guten Durchfärbung und einem ruhigen Warenbild.

Eine ähnliche gute Färbung wird erzielt, wenn anstelle des Pfropfpolymerisates gemäss Vorschrift 2 die gleiche Menge des gemäss Vorschrift 7 hergestellten Pfropfpolymerisates eingesetzt wird.

Beispiel 10

Ein rohes Baumwollgewirke (165 g/m$^2$) wird auf einem Foulard bei 25 °C mit einer Flotte, die im Liter

1 g des Farbstoffes der Formel (104),
5 g des Netzmittels gemäss Beispiel 1,
15 ml Natriumhydroxidlösung (30 %) und
75 ml Natronwasserglaslösung mit 26,3-27,7 % Silikatgehalt

enthält, imprägniert, wobei bei einem Walzendruck von 2 bar/cm$^2$ eine Flottenaufnahme von 67 % erzielt wird. Hiernach wird das Gewebe aufgerollt und 6 Stunden bei 25 °C gelagert. Anschliessend wird ohne Zwischentrocknung das gefärbte Gewirke, erneut auf einem Foulard, mit einer Flotte, die im Liter

5 g des oben angegebenen Netzmittels,
20 g des gemäss Vorschrit 2 hergestellten Pfropfpolymerisates,
50 ml Natriumhydroxid Lösung (30 %),
10 g Magnesiumsalz von Diethylentriaminpentaessigsäure und
50 ml einer wässrigen Wasserstoffsuperoxid-Lösung (35 %)

enthält, imprägniert, wobei bei einem Walzendruck von 2 bar/cm$^2$ eine Flottenaufnahme von 125 % erzielt wird. Dann wird das Gewirke wiederum aufgerollt und 15 Stunden bei 25 °C gelagert. Anschliessend wird die Färbung gespült und wie üblich fertiggestellt. Man erhält so einen guten Bleicheffekt und eine brillante blaue Färbung. Bei diesem Nass-in Nass-Verfahren wird durch den Zusatz des gemäss Vorschrift 2 hergestellten Pfropfpolymerisates, ohne Zwischentrocknung, die für den Bleichvorgang erforderliche Flottenaufnahme geschaffen.

**Patentansprüche**

1. Verfahren zum Färben von Textilmaterialien, die ganz oder teilweise aus Cellulosefasern bestehen mit substantiven Farbstoffen oder Reaktivfarbstoffen, dadurch gekennzeichnet, dass man die Cellulosematerialien mit einer wässrigen Färbeflotte, die ausser dem Farbstoff ein Pfropfpolymerisat aus einem Anlagerungsprodukt von einem Alkylenoxid an einen mindestens dreiwertigen aliphatischen Alkohol mit 3 bis 10 Kohlenstoffatomen und Acrylamid oder Methacrylamid enthält, klotzt und anschliessend die Fixierung der Farbstoffe durch Hitzeeinwirkung oder nach der Kalt-Verweil-Methode durchführt.

2. Verfahren gemäss Anspruch 1, dadurch gekennzeichnet, dass die Klotzflotte ein Pfropfpolymerisat aus einem Anlagerungsprodukt von 4 bis 100 Mol Propylenoxid an ein 3 bis 6 Kohlenstoffatome aufweisendes drei- bis sechswertiges Alkanol und Acrylamid oder Methacrylamid enthält.

3. Verfahren gemäss einem der Ansprüche 1 und 2, dadurch gekennzeichnet, dass das Pfropfpolymerisat 2,5 bis 50 Gew.-% des definierten Anlagerungsproduktes und 50 bis 97,5 Gew.-% des aufgepfropften Acrylamids oder Methacrylamids, bezogen auf das Pfropfpolymerisat, enthält.

4. Verfahren gemäss Anspruch 3, dadurch gekennzeichnet, dass das Pfropfpolymerisat 2,5 bis

20 Gew.% des Anlagerungsproduktes und 80 bis 97,5 Gew.% des aufgepfropften Acrylamids, bezogen auf das Pfropfpolymerisat, enthält.

5. Verfahren gemäss einem der Ansprüche 1 bis 4, dadurch gekennzeichnet, dass die Klotzflotte ein Pfropfpolymerisat aus Acrylamid und einem Anlagerungsprodukt von 40 bis 80 Mol Propylenoxid an 1 Mol Glycerin enthält.

6. Verfahren gemäss Anspruch 5, dadurch gekennzeichnet, dass das Pfropfpolymerisat 4 bis 10 Gew.% des Anlagerungsproduktes von 40 bis 80 Mol Propylenoxid an 1 Mol Glycerin und 90 bis 96 Gew.% des aufgepfropften Acrylamids, bezogen auf das Pfropfpolymerisat, enthält.

7. Verfahren gemäss einem der Ansprüche 1 bis 6, dadurch gekennzeichnet, dass die Klotzflotte das Pfropfpolymerisat in einer Menge von 5 bis 40 g, vorzugsweise 8 bis 20 g pro Liter in Form einer 3 bis 10 %igen wässerigen Lösung enthält.

8. Verfahren gemäss einem der Ansprüche 1 bis 7, dadurch gekennzeichnet, dass man mit Reaktivfarbstoffen färbt.

9. Verfahren gemäss einem der Ansprüche 1 bis 8, dadurch gekennzeichnet, dass die Fixierung der Farbstoffe mittels Mikrowellen erfolgt.

10. Verfahren gemäss einem der Ansprüche 1 bis 8, dadurch gekennzeichnet, dass die Fixierung der Farbstoffe gemäss dem Thermosol-Verfahren erfolgt.

11. Verfahren gemäss einem der Ansprüche 1 bis 8, dadurch gekennzeichnet, dass die Fixierung der Farbstoffe durch Dämpfen erfolgt.

12. Verfahren gemäss einem der Ansprüche 1 bis 8, dadurch gekennzeichnet, dass die Fixierung der Farbstoffe gemäss der Kalt-Verweil-Methode erfolgt.

13. Verfahren gemäss einem der Ansprüche 1 bis 12, dadurch gekennzeichnet, dass die Klotzflotte zusätzlich zu dem Pfropfpolymerisat ein alkalibeständiges Netzmittel enthält.

14. Verfahren gemäss Anspruch 13, dadurch gekennzeichnet, dass das Netzmittel (A) ein Alkylsulfonat, dessen Alkylrest 8 bis 20 Kohlenstoffatome aufweist, und (B) ein Anlagerungsprodukt von 2 bis 40 Mol Ethylenoxid an 1 Mol Fettalkohol oder Fettsäure mit jeweils 8 bis 22 Kohlenstoffatomen oder an 1 Mol Alkylphenol mit insgesamt 4 bis 12 Kohlenstoffatomen im Alkylteil enthält.

15. Verfahren gemäss Anspruch 14, dadurch gekennzeichnet, dass die Komponente (B) des Netzmittels ein Anlagerungsprodukt von 2 bis 10 Mol Ethylenoxid an 1 Mol Fettalkohol mit 8 bis 12 Kohlenstoffatomen ist.

16. Verfahren gemäss Anspruch 1, dadurch gekennzeichnet, dass die Klotzflotte ausser dem Farbstoff eine wässerige Zubereitung enthält, welche mindestens

1 bis 10 Gew.% des Pfropfpolymerisates

8 bis 25 Gew.% eines Alkylsulfonates, dessen Alkylrest 8 bis 20 Kohlenstoffatome aufweist,

3 bis 10 Gew.% eines Anlagerungsproduktes von 2 bis 40 Mol Ethylenoxid an 1 Mol Fettalkohol oder Fettsäure mit jeweils 8 bis 22 Kohlenstoffatomen oder an 1 Mol Alkylphenol mit insgesamt 4 bis 12 Kohlenstoffatomen im Alkylteil und

65 bis 88 Gew.% Wasser enthält.

## Claims

1. A process for dyeing textile materials which consist wholly or partly of cellulose fibres with substantive dyes or reactive dyes, which process comprises padding the cellulosic materials with an aqueous dye liquor which contains, in the addition to the dye, a graft polymer obtained from an adduct of an alkylene oxide with an at least trihydric aliphatic alcohol of 3 to 10 carbon atoms and acrylamide or methacrylamide, and subsequently fixing the dye by a heat treatment or by the cold pad-batch method.

2. A process according to claim 1, wherein the padding liquor contains a graft polymer obtained from an adduct of 4 to 100 moles of propylene oxide with a trihydric to hexahydric alkanol of 3 to 6 carbon atoms and acrylamide or methacrylamide.

3. A process according to claim 1, wherein the graft polymer contains 2.5 to 50 % by weight of the adduct and 50 to 97.5 % of the grafted acrylamide or methacrylamide, based on said graft polymer.

4. A process according to claim 3, wherein the graft polymer contains 2.5 to 20 % by weight of the adduct and 80 to 97.5 % by weight of the grafted acrylamide, based on said graft polymer.

5. A process according to any one of claims 1 to 4, wherein the padding liquor contains a graft polymer of acrylamide and an adduct of 40 to 80 moles of propylene oxide with 1 mole of glycerol.

6. A process according to claim 5, wherein the graft polymer contains 4 to 10 % by weight of the adduct of 40 to 80 moles of propylene oxide with 1 mole of glycerol and 90 to 96 % by weight of acrylamide, based on said graft polymer.

7. A process according to any one of claims 1 to 6, wherein the padding liquor contains 5 to 40 g/l, preferably 8 to 20 g/l, of the graft polymer in the form of a 3 to 10 % aqueous solution.

8. A process according to any one of claims 1 to 7, wherein dyeing is carried out with reactive dyes.

9. A process according to any one of claims 1 to 8, wherein dye fixation is carried out by means of microwaves.

10. A process according to any one of claims 1 to 8, wherein dye fixation is carried out by means of the thermosol process.

11. A process according to any one of claims 1 to 8, wherein dye fixation is carried out by steaming.

12. A process according to any one of claims 1 to 8, wherein dye fixation is carried out by the cold pad-batch method.

13. A process according to any one of claims 1 to 12, wherein the padding liquor contains an alkali-resistant wetting agent in addition to the graft polymer.

14. A process according to claim 13, wherein the wetting agent comprises (A) an alkylsulfonate having 8 to 20 carbon atoms in the alkyl moiety, and (B) an adduct of 2 to 40 moles of ethylene oxide with 1 mole of a fatty alcohol or fatty acid, each containing 8 to 22 carbon atoms, or with 1 mole of an alkylphenol containing a total of 4 to 12 carbon atoms in the alkyl moiety.

15. A process according to claim 14, wherein the component (B) of the wetting agent is an adduct of 2 to 10 moles of ethylene oxide with 1 mole of a fatty alcohol containing 8 to 12 carbon atoms.

16. A process according to claim 1, wherein the padding liquor contains, in addition to the dye, an aqueous formulation comprising at least

1 to 10 % by weight of the graft polymer,

8 to 25 % by weight of an alkylsulfonate containing 8 to 20 carbon atoms in the alkyl moiety,

3 to 10 % by weight of an adduct of 2 to 40 moles of ethylene oxide with 1 mole of a fatty alcohol or fatty acid, each containing 8 to 22 carbon atoms, or with 1 mole of an alkylphenol containing 4 to 12 carbon atoms in the alkyl moiety, and

65 to 88 % by weight of water.

**Revendications**

1. Procédé pour la teinture de matériaux textiles constitués totalement ou partiellement de fibres de cellulose, avec des colorants substantifs ou des colorants réactifs, caractérisé en ce que l'on imprègne au foulard les matières cellulosiques avec un bain de teinture aqueux, qui contient, en plus du colorant, un produit de polymérisation par greffage obtenu à partir d'un produit d'addition d'un oxyde d'alkylène sur un alcool aliphatique au moins trivalent possédant de 3 à 10 atomes de carbone et d'acrylamide ou de méthacrylamide, et en ce que l'on opère ensuite la fixation du colorant par action de la chaleur ou selon la méthode par contact à froid.

2. Procédé selon la revendication 1, caractérisé en ce que le bain de foulardage contient un produit de polymérisation par greffage obtenu à partir d'un produit d'addition de 4 à 100 moles d'oxyde de propylène sur un alcanol trivalent à hexavalent, possédant de 3 à 6 atomes de carbone, et d'acrylamide ou de méthacrylamide.

3. Procédé selon l'une des revendications 1 et 2, caractérisé en ce que le produit de polymérisation par greffage contient de 2,5 à 50 % en poids du produit d'addition défini et de 50 à 97,5 % en poids d'acrylamide ou de méthacrylamide greffé, rapporté au produit de polymérisation par greffage.

4. Procédé selon la revendication 3, caractérisé en ce que le produit de polymérisation par greffage contient de 2,5 à 20 % en poids du produit d'addition et de 80 à 97,5 % en poids d'acrylamide greffé, rapporté au produit de polymérisation par greffage.

5. Procédé selon l'une des revendications 1 à 4, caractérisé en ce que le bain de teinture contient un produit de polymérisation par greffage obtenu à partir d'acrylamide et d'un produit d'addition de 40 à 80 moles d'oxyde de propylène sur 1 mole de glycérine.

6. Procédé selon la revendication 5, caractérisé en ce que le produit de polymérisation par greffage contient de 4 à 10 % en poids du produit d'addition de 40 à 80 moles d'oxyde de propylène sur 1 mole de glycérine et 90 à 96 % en poids d'acrylamide greffé, rapporté au produit de polymérisation par greffage.

7. Procédé selon l'une des revendications 1 à 6, caractérisé en ce que le bain de teinture contient le produit de polymérisation par greffage à raison de 5 à 40 g, de préférence de 8 à 20 g, par litre, sous la forme d'une solution aqueuse de 3 à 10 %.

8. Procédé selon l'une des revendications 1 à 7, caractérisé en ce qu'on teint à l'aide de colorants réactifs.

9. Procédé selon l'une des revendications 1 à 8, caractérisé en ce que la fixation du colorant est effectuée au moyen de micro-ondes.

10. Procédé selon l'une des revendications 1 à 8, caractérisé en ce que la fixation du colorant est effectuée selon le procédé de thermofixage.

11. Procédé selon l'une des revendications 1 à 8, caractérisé en ce que la fixation du colorant est effectuée par vaporisage.

12. Procédé selon l'une des revendications 1 à 8, caractérisé en ce que la fixation du colorant est effectuée selon la méthode par contact à froid.

13. Procédé selon l'une des revendications 1 à 12, caractérisé en ce que le bain de foulardage contient, en plus du produit de polymérisation par greffage, un agent mouillant stable aux alcalis.

14. Procédé selon la revendication 13, caractérisé en ce que l'agent mouillant contient (A) un alkylsulfonate, dont le radical alkyle présente 8 à 20 atomes de carbone, et (B) un produit d'addition de 2 à 40 moles d'oxyde d'éthylène sur 1 mole d'un alcool aliphatique ou d'un acide aliphatique avec dans chaque cas 8 à 22 atomes de carbone, ou bien sur 1 mole d'un alkylphénol avec au total 4 à 12 atomes de carbone dans la partie alkylique.

15. Procédé selon la revendication 14, caractérisé en ce que le composant (B) de l'agent mouillant est un produit d'addition de 2 à 10 moles d'oxyde d'éthylène sur 1 mole d'un alcool aliphatique ayant de 8 à 12 atomes de carbone.

16. Procédé selon la revendication 1, caractérisé en ce que le bain de foulardage contient, en plus du colorant, une préparation aqueuse, qui contient au moins :

1 à 10 % en poids du produit de polymérisation par greffage,

8 à 25 % en poids d'un alkylsulfonate, dont le radical alkyle présente de 8 à 20 atomes de carbone,

3 à 10 % en poids d'un produit d'addition de 2 à 40 moles d'oxyde d'éthylène sur 1 mole d'un alcool aliphatique ou d'un acide aliphatique, présentant chacun de 8 à 22 atomes de carbone, ou sur 1 mole d'un alkylphénol ayant au total de 4 à 12 atomes de carbone dans la partie alkyle, et

65 à 88 % en poids d'eau.